Europäisches Patentamt

(19) **European Patent Office** (11) Veröffentlichungsnummer: **0 074 484**

Office européen des brevets **B1**

(12) **EUROPÄISCHE PATENTSCHRIFT**

(45) Veröffentlichungstag der Patentschrift:      (51) Int. Cl.⁴: **B 24 B 17/06**, G 05 B 19/42,
**19.02.86**                                           **B 23 Q 17/24**

(21) Anmeldenummer: **82106938.2**

(22) Anmeldetag: **31.07.82**

(54) **Verfahren und Vorrichtung zum Speichern ausgewählter Punkte einer Sollformlinie bei einer Projektionsformenschleifmaschine.**

(30) Priorität: **12.09.81 DE 3136241**

(43) Veröffentlichungstag der Anmeldung:
**23.03.83 Patentblatt 83/12**

(45) Bekanntmachung des Hinweises auf die Patenterteilung:
**19.02.86 Patentblatt 86/8**

(84) Benannte Vertragsstaaten:
**CH DE FR GB IT LI**

(56) Entgegenhaltungen:
**CH - A - 146 627**
**CH - A - 489 331**
**DE - A - 2 934 658**
**DE - B - 1 213 288**
**FR - A - 2 295 472**
**FR - A - 2 372 678**

(73) Patentinhaber: **Werkzeugmaschinenbau Präzisions-Technik GmbH, Carl-Jacob-Kolb-Weg, D-6980 Wertheim (DE)**

(72) Erfinder: **Henseleit, Roland, Dipl. Ing.,
Gustav-Freytag-Strasse 33, D-6980 Wertheim (DE)**
Erfinder: **Kolb, Carl-Joachim, Hofgut Tiefental,
D-6987 Külsheim-Tiefental (DE)**

(74) Vertreter: **Hoeger, Stellrecht & Partner,
Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft die Verwendung eines synchron mit der Schleifscheibe einer NC-gesteuerten Projektionsformenschleifmaschine verfahrbaren und auf deren Bildschirm projizierbaren Tastelements zum Abtasten der auf dem Bildschirm ebenfalls sichtbaren und in einen in der Steuerung vorhandenen Speicher abzulegenden Sollformlinie eines Werkstückes.

Bei einer bekannten Projektionsformenschleifmaschine (DE B 1 213 288) werden eine in ihrer Position steuerbare Schleifscheibe und ein von ihr zu bearbeitendes Werkstück im Eingriffsbereich über einen Projektionsstrahlengang vergrössert auf einen Projektionsschirm abgebildet, über den ein durchsichtiger Träger gelegt ist, auf den eine Sollformlinie aufgezeichnet ist. Durch entsprechende Steuerung der Position der Schleifscheibe, beispielsweise mittels eines Kreuztisches, lässt sich die Schleifscheibe so steuern, dass das Werkstück entsprechend der Sollformlinie geschliffen wird. Dies lässt sich auf dem Projektionsschirm genau verfolgen, da die Grenzlinie zwischen dunkel (Werkstück) und hell (durchgehendes Licht) im Idealfall mit der Sollformlinie übereinstimmt.

Für den Schleifvorgang lässt sich darüberhinaus die jeweilige Position der Schleifscheibe mittels einer elektronischen Steuerung bestimmen, beispielsweise mittels einer CNC-Steuerung, die beispielsweise über den Schlitten eines Kreuztisches zugeordnete Stellmotoren den die Schleifscheibe aufnehmenden Träger verschiebt (FR-A 2 372 678).

Bisher war es üblich, zur Eingabe der Sollformliniendaten in eine solche Steuerung einzelne Punkte der Steuerung numerisch über eine Tastatur, einen Lochstreifen oder einen anderen Datenträger einzugeben. Dabei ist die Beschaffung der Daten ausserordentlich zeitaufwendig.

Der Erfindung liegt die Aufgabe zugrunde, eine Möglichkeit zu schaffen, mit der die Eingabe einer Sollformkurve in die Steuerung einer Projektionsformenschleifmaschine beschleunigt und hinsichtlich ihrer Genauigkeit verbessert werden kann.

Diese Aufgabe wird durch die Verwendung eines Tastelements gemäss Patentanspruch 1 gelöst. Die Gewinnung des Datensatzes zur Steuerung der Projektionsformenschleifmaschine geschieht dadurch, dass an dem die Schleifscheibe aufnehmenden Träger ein Tastelement befestigt ist, welches mittels der Projektionseinrichtung auf dem Projektionsschirm abbildbar ist.

Das Tastelement hat bezüglich der Eingriffsstelle der Schleifscheibe eine genau definierte Lage, so dass bei Abbildung des Tastelements beispielsweise auf dem Anfangspunkt der Sollformlinie auf dem Projektionsschirm auch die exakte Lage der Schleifscheibe relativ zu dem Anfangspunkt der tatsächlich in das Werkstück einzuarbeitenden Kontur bekannt ist. Man kann somit durch eine genau bekannte Verschiebung der Schleifscheibe, die dem Abstand Schleifscheibe-Tastelement entspricht, die Schleifscheibe genau in den Anfangspunkt der zu schleifenden Kontur verfahren.

Dasselbe gilt bezüglich jedes weiteren Punktes, der auf der Sollformlinie besonders gekennzeichnet ist, beispielsweise indem auf dem die Sollformkurve aufnehmenden Träger Löcher eingestochen sind. Sobald das Tastelement auf dem Projektionsschirm auf einen solchen ausgewählten Punkt zeigt, werden die dieser Stellung entsprechenden Positionsdaten des Trägers gespeichert, und dieses Verfahren wird über eine grössere Anzahl von ausgewählten Punkten längs der Sollformlinie durchgeführt, bis die wesentlichen Eigenschaften der Sollformlinie in Form numerischer Daten in der Steuereinheit gespeichert sind. Bei all diesen Daten ist zu berücksichtigen, dass bei der Aufnahme die Schleifscheibe von der Eingriffsstelle um eine definierte Strecke entfernt war, jedoch ist diese zusätzliche Verschiebung bei allen Punkten gleich, so dass sie für die nachfolgende Steuerung der Schleifscheibe ohne weiteres berücksichtigt werden kann.

Besonders vorteilhaft ist bei der beanspruchten Verwendung vor allen Dingen, dass durch die starke Vergrösserung des Projektionsstrahlenganges eine ausserordentlich genaue Positionsbestimmung des Trägers durchführbar ist, so dass man eine ausserordentlich hohe Genauigkeit erhält. Ausserdem lässt sich die Aufzeichnung der Sollformlinie in sehr einfacher Weise durchführen, indem man die Bewegung des Trägers von Hand verstellt, wie es das Bedienungspersonal von Projektionsformenschleifmaschinen auch zur unmittelbaren Bearbeitung von Werkstücken gewöhnt ist.

Das Tastelement kann zwischen einer ersten Stellung, in welcher es in den Strahlengang der Projektionseinrichtung eintaucht und einer zweiten Stellung bewegbar sein, in der es aus dem Strahlengang entfernt ist. In der zweiten Stellung stört daher das Tastelement beim Bearbeitungsvorgang nicht. Das Tastelement kann weiterhin mittels eines elektromotorischen oder mittels eines mechanischen Antriebs zwischen den beiden Stellungen bewegbar sein, wobei es günstig ist, wenn dieser Antrieb von der Steuerung selbst betätigbar ist.

Bei einer bevorzugten Ausführungsform ist vorgesehen, dass das Tastelement ein Halter ist, der eine durchsichtige, Markierungen aufweisende Strichplatte oder eine teilweise oder gar nicht lichtdurchlässige Platte mit einem für das Projektionslicht stärker durchlässigen kleinen Loch hält, dessen Durchmesser vorzugsweise 0,1 mm beträgt. Dadurch kann auf dem Projektionsschirm die Lage des Tastelements besonders präzise abgelesen werden, bei einer fünfzigfachen Vergrösserung des Projektionsstrahlenganges und einem Loch in einer lichtundurchlässigen Scheibe mit einem Durchmesser von 0,1 mm erhält man somit eine Positionierungsgenauigkeit in der Grössenordnung von 1 bis 2 μm.

Die nachfolgende Beschreibung bevorzugter Ausführungsformen dient im Zusammenhang mit der Zeichnung der näheren Erläuterung. Es zeigen:

Fig. 1 eine schematische perspektivische Ansicht der wichtigsten Teile einer Projektionsformenschleifmaschine;

Fig. 2 eine vergrösserte perspektivische Teilansicht der in Figur 1 dargestellten Projektionsformenschleifmaschine;

Fig. 3 vier Möglichkeiten einer in den Projektionsstrahlengang einführbaren Platte zur exakten Anzeige der Stellung des Schleifscheibenträgers und

Fig. 4 eine schematische Darstellung des Projektionsschirmes mit einer Sollformlinie und dem Bild des Tastelements.

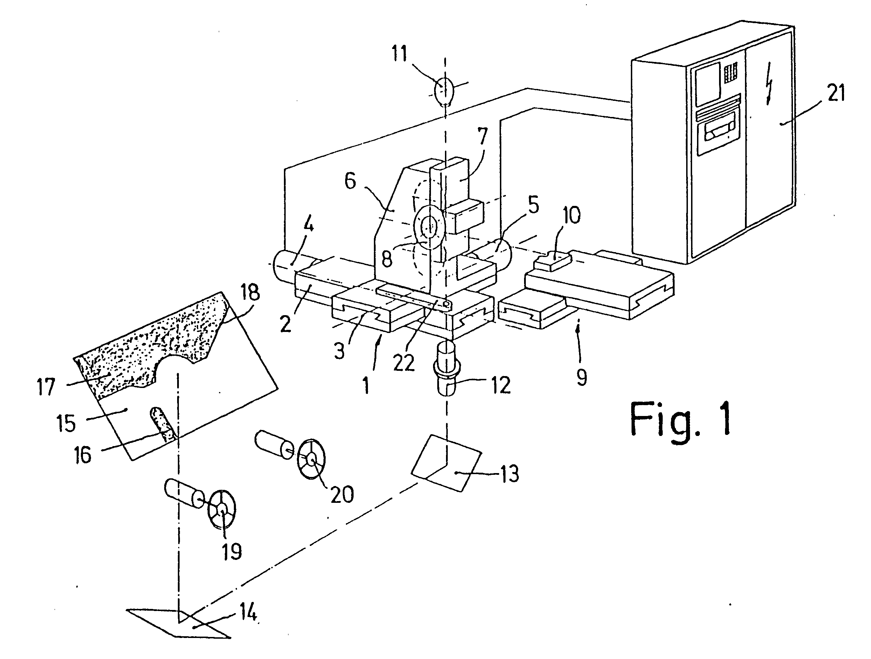

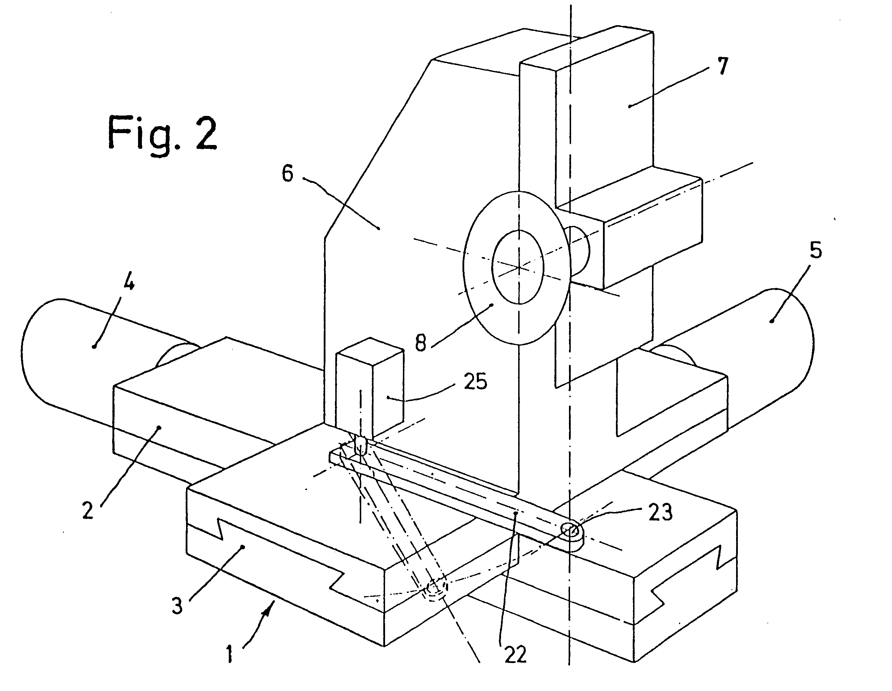

Auf einem Kreuztisch 1 einer Projektionsformenschleifmaschine mit zwei Schlitten 2 und 3, die mittels Stellmotoren 4 bzw. 5 senkrecht zueinander verschiebbar sind, ist auf dem oberen Schlitten 3 ein Träger 6 angeordnet, der einen in senkrechter Richtung verschieblichen Halter 7 trägt, an dem an einer horizontalen Welle eine Schleifscheibe 8 drehbar und motorisch angetrieben gelagert ist (Figuren 1 und 2). Ein zweiter Kreuztisch 9 trägt das zu bearbeitende Werkstück 10, welches durch Verschiebung eines der beiden Kreuztische oder beider Kreuztische mit der Schleifscheibe in Eingriff bringbar ist.

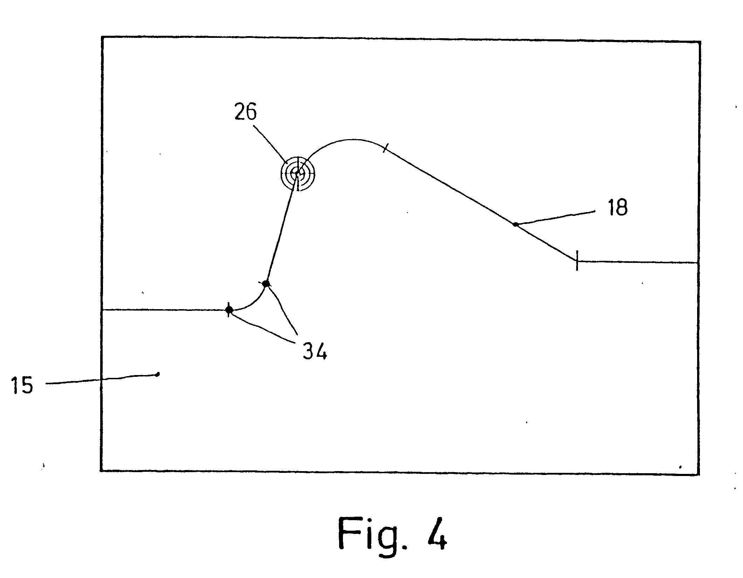

Die Eingriffsstelle wird mittels eines Projektionsstrahlenganges, der eine Lichtquelle 11, ein Projektionsobjektiv 12 sowie zwei Umlenkspiegel 13 und 14 umfasst, auf einen Projektionsschirm 15 geworfen, auf dem das Bild 16 der Schleifscheibe und das Bild 17 des Werkstückes abgebildet sind. Auf dem Projektionsschirm ist entweder unmittelbar oder mittels eines aufgelegten durchsichtigen Trägers eine Sollformkurve 18 aufgezeichnet, die die Kontur markiert, welche das Werkstück nach der Bearbeitung aufweisen soll (Figur 4).

Zur Bearbeitung des Werkstückes lassen sich die Schlitten 2 und 3 des Kreuztisches 1 entweder manuell über Handräder 19 und 20 oder über eine CNS-Steuerung 21 und die Stellmotoren 4 und 5 steuern.

An dem oberen Schlitten 3, der den Träger 6 aufnimmt, ist ausserdem ein um eine senkrechte Achse verschwenkbarer Halter 22 gelagert, der an seinem freien Ende eine Öffnung 23 aufweist, in die Platten 24 verschiedener Ausgestaltung eingelegt werden können (Figur 2). Mittels eines elektromotorischen Antriebs 25 lässt sich der Halter in eine erste, in Figur 2 ausgezogen dargestellte Stellung verschwenken, in welcher die Öffnung mit der eingelegten Platte 24 im Projektionsstrahlengang angeordnet ist. In einer zweiten, in Figur 2 strichpunktiert dargestellten Stellung ist die Öffnung 23 aus dem Projektionsstrahlengang ausgeschwenkt.

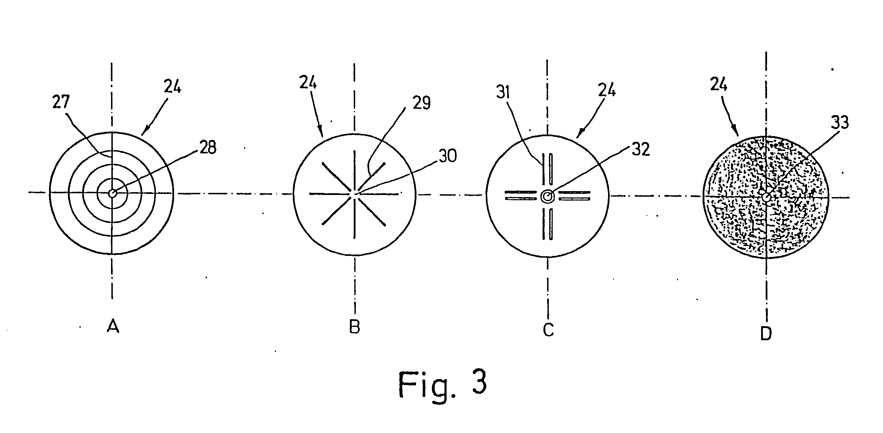

Die in die Öffnung 23 einlegbaren Platten sind so ausgestaltet, dass die Position des von ihnen auf dem Projektionsschirm erzeugten Bildes 26 relativ zur Sollformkurve 18 möglichst genau feststellbar ist. Figur 3 zeigt einige mögliche Ausführungen der Platte 24. Die Platten A, B und C sind durchlässig für das Projektionslicht und weisen Linien auf, die den Mittelpunkt 27 der Platten deutlich machen. In der Platte A erfolgt dies durch zwei senkrecht zueinander stehende Linien 27 und durch den Mittelpunkt 28 konzentrisch umgebende Kreise. In dem Ausführungsbeispiel B schneiden sich vier jeweils um 45° gegeneinander gedrehte Linien 29 in einem Mittelpunkt 30. Im Ausführungsbeispiel C sind zwei senkrecht zueinander stehende Markierungslinienpaare 31 vorgesehen, die sich in einem Mittelpunkt 32 schneiden.

Das Ausführungsbeispiel D stellt eine teilweise oder gar nicht für das Projektionslicht durchlässige Platte dar, die im Zentrum eine kleine Öffnung 33 aufweist, deren Durchmesser beispielsweise 0,1 mm beträgt.

Im eingeschwenkten Zustand werden die Linien 27, 29 und 31 der Platten gemäss Ausführungsbeispiel A, B bzw. C als Bild 26 auf den Projektionsschirm geworfen, so dass man die Lage des jeweiligen Mittelpunkts 28, 30 bzw. 32 relativ zur Sollformlinie 18 genau bestimmen kann. Im Ausführungsbeispiel D erscheint das Bild der Öffnung 33 als heller Punkt in einem dunklen Umfeld und ist daher ebenfalls genau zu lokalisieren.

Zur Einspeicherung des Verlaufes der Sollformlinie wird die auf dem Projektionsschirm angeordnete Sollformlinie 18 an verschiedenen Stellen gekennzeichnet, so dass man ausgewählte Punkte 34 erhält. Der Kreuztisch 1 wird mittels der Handräder 19 und 20 so eingestellt, dass das Bild 26 des Tastelements (Platte 24) mit seinem Mittelpunkt exakt auf dem Anfang der Sollformkurve liegt. Die entsprechende Position der beiden Schlitten 2 und 3 wird daraufhin abgespeichert. In gleicher Weise wird anschliessend das Zentrum des Bildes 26 durch Betätigung der Handräder 19 und 20 mit weiteren ausgewählten Punkten 34 zur Deckung gebracht, wobei jedes Mal die Koordinaten der Schlittenpositionen des Kreuztisches 1 gespeichert werden.

Als ausgewählte Punkte können beispielsweise die Enden geradliniger oder kreisförmig gebogener Linien dienen oder Knickstellen zwischen zwei geradlinigen Bereichen. Sobald der Steuerung die Lage dieser ausgewählten Punkte bekannt ist, kann sie aufgrund eines vorher eingegebenen Programms den exakten Linienverlauf zwischen den ausgewählten Punkten berechnen.

Gemäss dieser Berechnung bewegt dann die Steuerung 21 die Schlitten 2 und 3 des Kreuztisches 1 und damit die Schleifscheibe 8, so dass eine entsprechende Kontur in das auf dem Kreuztisch 9 festgehaltene Werkstück 10 eingeschliffen wird.

Die Genauigkeit der Bestimmung der Koordinaten der ausgewählten Punkte ist bei diesem Verfahren ausserordentlich hoch, da das Tastelement durch den Projektionsstrahlengang stark vergrössert ist. Weiterhin ist das Verfahren für das Bedienungspersonal leicht und in kurzer Zeit durchzuführen, denn der Kreuztisch 1 wird mittels der Handräder 19 und 20 in der gleichen Weise verfahren, wie dies beim manuellen Schleifen von Werkstücken der Fall ist.

Insbesondere das Ausführungsbeispiel D der in Figur 3 dargestellten Platte 24 mit dem zentralen Loch eignet sich besonders gut zu einer automatischen Verschiebung der Schlitten 2 und 3 des Kreuztisches 1 bei der Speicherung der den ausgewählten Punkten entsprechenden Daten. Die Position des Bildes 26 kann nämlich aufgrund der Ausgestaltung der Platte mit einer sehr kleinen zentralen Öffnung leicht mittels einer Photozelle abgetastet werden, welche anstelle der Handräder die Verschiebung der Schlitten 2 und 3 des Kreuztisches 1 übernimmt, bis das Bild der beleuchteten zentralen Öffnung 33 mit dem ausgewählten Punkt 34 übereinstimmt, der – wie erwähnt – durch Einstechen in die Sollkurve erzeugt werden kann, so dass auch dieser Punkt heller ist als die anliegenden Bereiche der Sollformkurve. Dabei ist es vorteilhaft, wenn der Durchmesser des Bildes der Öffnung 33 der Strichbreite der Sollformlinie entspricht.

## Patentansprüche

1. Verwendung eines synchron mit der Schleifscheibe (8) einer NC-gesteuerten Projektionsformenschleifmaschine verfahrbaren und auf deren Bildschirm (15) projizierbaren Tastelements zum Abtasten der auf dem Bildschirm ebenfalls sichtbaren und in einen in der Steuerung vorhandenen Speicher abzulegenden Sollformlinie (18) eines Werkstückes.

2. Verwendung gemäss Anspruch 1, dadurch gekennzeichnet, dass das Tastelement als durchsichtige Markierungen (27, 29, 31) aufweisende Strichplatte ausgebildet ist.

3. Verwendung gemäss Anspruch 1, dadurch gekennzeichnet, dass das Tastelement als mit einem Loch (33) versehene, undurchsichtige Platte ausgebildet ist.

## Claims

1. The use of a scanning member movable in synchronisation with the grinding wheel (18) of an NC-controlled projection-forming grinding machine, the scanning member being projected onto a screen (15) of the machine for scanning a line (18) also visible on the screen, the line 18 corresponding to the desired shape of a workpiece and being stored in the memory provided in the control.

2. The use according to claim 1, characterised in that the scanning member is formal as a transparent graduated plate having markings (27, 29, 31).

3. The use according to claim 1, characterised in that the scanning member is formed as an opaque plate provided with a hole (33).

## Revendications

1. Utilisation d'un palpeur déplaçable au synchronisme avec la meule (8) d'une rectifieuse de profil à projection et commande CN, et projetable sur l'écran (15) de ladite machine pour le palpage du profil idéal (18) d'une pièce, également visible sur l'écran et rangé dans une mémoire de la commande.

2. Utilisation selon revendication 1, caractérisée en ce que le palpeur est constitué par un réticule transparent portant des repères (27, 29, 31).

3. Utilisation selon revendication 1, caractérisée en ce que le palpeur est constitué par un disque opaque muni d'un trou (33).

Fig. 1

Fig. 2

Fig. 3

Fig. 4